# FASCICULE DE BREVET EUROPEEN

(11) **EP 3 941 884 B1**
(45) Date de publication et mention de la délivrance du brevet: **13.12.2023**
(21) Numéro de dépôt: 20710973.7
(22) Date de dépôt: 19.03.2020
(51) Int. Cl.: C03C 17/22

(54) **ARTICLE VITROCERAMIQUE**
GLASKERAMIKARTIKEL
GLASS-CERAMIC ARTICLE

(30) Priorité: 22.03.2019 FR 1903010
(43) Date de publication de la demande: 26.01.2022
(73) Titulaire: Eurokera S.N.C., 02400 Château-Thierry (FR)
(72) Inventeur: JEGOREL, Théo, 75019 PARIS (FR); LUAIS, Erwann, 02400 CHATEAU THIERRY (FR)
(74) Mandataire: Saint-Gobain Recherche
(86) Numéro de dépôt international: PCT/EP2020/057562
(87) Numéro de publication internationale: WO 2020/193347

(56) Documents cités:
- WO-A2-2014/096695
- FR-A1- 3 038 597
- US-A1- 2010 304 090
- MUSIL J ET AL: "Structure and properties of magnetron sputtered Zr-Si-N films with a high (>=25 at.%) Si content", THIN SOLID FILMS, ELSEVIER, AMSTERDAM, NL, vol. 478, no. 1-2, 1 mai 2005 (2005-05-01) , pages 238-247, XP027865162, ISSN: 0040-6090 [extrait le 2005-05-01]

## Description

La présente invention concerne le domaine des vitrocéramiques. Plus précisément, elle concerne un article, ou produit, en vitrocéramique, notamment une plaque vitrocéramique destiné(e) à servir de surface de meuble et/ou de surface de cuisson. Par article vitrocéramique ou en vitrocéramique, on entend un article à base d'un substrat (tel qu'une plaque) en matériau vitrocéramique, ledit substrat pouvant le cas échéant être muni d'accessoires ou d'éléments supplémentaires, décoratifs ou fonctionnels, requis pour son usage final, l'article pouvant désigner tout aussi bien le substrat seul que celui muni d'équipements supplémentaires (par exemple une plaque de cuisson munie de son bandeau de commande, de ses éléments de chauffage, etc).

Une vitrocéramique est à l'origine un verre, dit verre précurseur ou verre-mère ou green-glass, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisée comme plaque de cuisson dans le domaine de l'électroménager ou comme surface de meuble, une plaque vitrocéramique doit présenter une bonne résistance à la pression, aux chocs (support et chute d'ustensiles, etc), etc.

Traditionnellement, les plaques vitrocéramiques sont utilisées comme plaques de cuisson, ou elles peuvent aussi être associées à des éléments de chauffage dans d'autres applications, par exemple pour former des inserts de cheminées. Depuis peu, leur utilisation s'étend à d'autres domaines de la vie quotidienne : les plaques vitrocéramiques peuvent ainsi servir de surfaces de meuble, notamment pour former des plans de travail, des ilots centraux, des consoles, etc. la surface qu'elles occupent dans ces nouvelles applications étant plus importante que par le passé.

De par l'utilisation répétée d'ustensiles à leur surface (tels que les casseroles pour les plaques de cuisson ou divers éléments ménagers pour les surfaces de travail), les plaques en vitrocéramique peuvent à l'usage se rayer sous l'effet de la friction avec ces ustensiles, voire aussi se colorer sous l'effet de la friction avec des métaux. La nourriture pouvant adhérer à la surface de ses plaques ou ces plaques pouvant présenter des problèmes de traces de doigts, l'utilisation de produits de nettoyage tels que des éponges à récurer plus abrasives peut également être une source supplémentaire de rayures.

Les plaques peuvent par ailleurs présenter différents revêtements à but fonctionnel et/ou décoratif, les plus courants étant les émaux, à base de fritte de verre et de pigments, et certaines peintures résistant à haute température, par exemple à base de résines silicones. D'autres revêtements existent également, notamment à base de couches ou d'empilements de couches, telles que des couches réfléchissantes pour obtenir des effets de contrastes, mais ces revêtements sont généralement plus onéreux et leur fabrication est souvent plus délicate, cf. les documents WO 2014/096695, FR 3 038 597 ou US 2010/304090. Le fait d'ajouter un revêtement peut également complexifier l'entretien des plaques, les revêtements pouvant en effet s'altérer lors du nettoyage ou altérer les propriétés optiques ou mécaniques de la vitrocéramique.

Une préoccupation constante dans le domaine des vitrocéramiques, que la vitrocéramique soit revêtue ou non, reste de pouvoir offrir un produit d'entretien facile, conservant son aspect et ses propriétés dans le temps.

La présente invention à chercher à pallier les précédents inconvénients des plaques vitrocéramiques en termes de dégradations liées à la friction d'ustensiles (rayures, coloration par friction de métal) en proposant une plaque vitrocéramique améliorée, en particulier une nouvelle plaque vitrocéramique destinée à être utilisée avec un ou des éléments de chauffage telle qu'une plaque de cuisson, ou destinée à servir de surface de meuble, cette plaque permettant de limiter l'apparition de rayures à sa surface dans son usage quotidien et de limiter également l'apparition de colorations dues aux frottements avec des ustensiles métalliques, sans pour autant nuire aux autres propriétés recherchées pour son usage ni à son aspect esthétique.

Ce but est atteint grâce au produit vitrocéramique mis au point selon l'invention dans lequel l'apparition des rayures ou des colorations est réduite par l'application d'un revêtement spécifique, ledit revêtement étant sélectionné suivant des critères précis afin d'obtenir l'effet recherché. Les inventeurs ont en effet mis en évidence que l'ajout de zirconium dans une couche de matériau dur (matériau par exemple de type nitrure de silicium et/ou d'aluminium) déposée en surface de la vitrocéramique, et en particulier le dépôt ou la présence en surface de la vitrocéramique (notamment sur la face destinée à être en contact avec des ustensiles, généralement la face supérieure de la plaque) d'une couche comprenant du nitrure de silicium-zirconium avec une certaine proportion atomique de zirconium avait des effets très favorables sur la réduction des rayures et sur la réduction des effets de coloration dus aux frottements avec du métal.

La présente invention concerne donc un nouvel article vitrocéramique, comprenant au moins un substrat, tel qu'une plaque, en vitrocéramique, ledit substrat étant revêtu en au moins une zone d'au moins une couche comportant du nitrure de silicium zirconium, SiₓZr_{y}N_{z}, avec un ratio atomique de Zr sur la somme Si + Zr, y / (x + y), de 10% à 90% (ou en d'autres termes, compris entre 10 et 90%, bornes incluses, ou encore compris dans un domaine allant de 10 à 90%), de préférence de 15% à 50%, et en particulier de 28% à 33%, l'épaisseur de ladite couche est comprise dans un domaine allant de 200 à 5000 nm.

La couche déposée selon l'invention augmente la durabilité des plaques en permettant à la fois de réduire considérablement l'apparition de rayures et de limiter l'apparition de colorations dues aux frottements d'ustensiles métalliques (tels que des casseroles).

Le produit selon l'invention présente également une bonne adhérence de la couche au substrat vitrocéramique (sans avoir nécessité de traitement préalable du support et/ou l'utilisation d'un promoteur d'adhésion, d'une couche d'accrochage ou d'un primaire) ou à toute couche adjacente éventuellement présente sur le substrat. Cette couche/ce revêtement ne montre en particulier aucune délamination après un choc thermique (par exemple aux environs de 600°C), et résiste à de hautes températures. Le substrat revêtu présente une bonne stabilité thermique et peut être utilisé avec différentes sources de chauffage (à induction, radiantes, etc). La couche/le revêtement ne fragilise pas de surcroit mécaniquement le substrat vitrocéramique.

La couche précitée est avantageusement constituée essentiellement (à au moins 85% en poids), voire uniquement (à l'exception des impuretés éventuellement présentes qui ne représentent dans ce cas pas plus de 5% de la couche), de silicium, zirconium et azote, et est appelée par la suite plus simplement "couche de nitrure de silicium zirconium". L'appellation « nitrure de silicium zirconium» n'exclue pas le cas échéant la présence d'autres éléments chimiques, ni ne préjuge de la stoechiométrie réelle de la couche. La couche de nitrure de silicium zirconium peut notamment être dopée ou comprendre une faible quantité d'un ou plusieurs éléments chimiques, typiquement l'aluminium ou le bore, ajoutés en tant que dopants dans les cibles utilisées, dans le but d'augmenter leur conductivité électronique et de faciliter ainsi le dépôt par la technique de pulvérisation cathodique magnétron. La couche sélectionnée selon l'invention est en particulier soit une couche en (ou de) nitrure de silicium zirconium, SixZryNz, soit une couche en nitrure de silicium zirconium dopé à l'aluminium, SixZryNz:Al. Le taux de dopant(s) (en particulier l'aluminium) est cependant inférieur à 15% en poids (dans la cible et dans la couche), de préférence inférieur à 10% en poids, voire nul. Plus généralement, le taux d'autre(s) composant(s) que le silicium, le zirconium et l'azote dans la couche est inférieur à 15% en poids, de préférence inférieur à 10% en poids, voire nul.

Le ratio atomique de Zr sur la somme Si + Zr, y / (x + y) dans la couche de nitrure de silicium zirconium sélectionnée selon l'invention est de 10% à 90%, de préférence de 15% à 50%, et en particulier de 28% à 33%, comme indiqué précédemment. Une telle couche peut en particulier être déposée avec une cible comportant par exemple de 85% à 60% atomique de Si pour 15% à 40% atomique de Zr, cette cible étant pulvérisée dans une atmosphère contenant de l'azote.

Ladite couche sélectionnée selon l'invention peut en outre présenter une nitruration z allant notamment de 4/3 (x + y) à 5/3 (x + y).

La couche de nitrure de silicium zirconium (ou chaque couche de nitrure de silicium zirconium s'il y en a plusieurs comme précisé ultérieurement) utilisée pour revêtir la vitrocéramique aux fins d'améliorer la durabilité de ladite vitrocéramique est avantageusement une couche épaisse, en particulier plus épaisse que les couches minces habituellement déposées par magnétron (dont l'épaisseur (physique) n'excède pas de l'ordre de 100 nm), l'épaisseur (physique) de ladite couche étant notamment comprise dans un domaine allant de 700 à 2500 nm et de préférence de 1000 à 1500 nm. Avantageusement, la couche de nitrure de silicium zirconium selon l'invention présente une dureté H supérieure à 14 GPa, et en particulier supérieure à 20 GPa, voire supérieure à 30 GPa. Cette couche présente également un module d'élasticité E supérieur à 140 GPa, en particulier supérieur à 150 GPa, voire de 200 GPa ou plus, la dureté H et le module élastique E étant mesurés à l'aide d'un nanoindenteur de type DCMII-400 commercialisé par la société CSM Instruments, la pointe utilisée étant une pointe diamant pyramidale de type Berkovich à 3 faces, selon la norme NF EN ISO 14577, sur la couche déposée en aplat (avec un taux de recouvrement de 100%) sur la vitrocéramique.

Dans la présente invention, une seule couche de nitrure de silicium zirconium est en particulier suffisante pour obtenir les améliorations selon l'invention. Par couche on entend une couche uniforme d'un même matériau, même si par exemple ladite couche a été obtenue en plusieurs passes à partir d'une même cible. Le revêtement incluant la couche sélectionnée selon l'invention peut ainsi ne contenir avec avantages qu'une seule couche comportant du nitrure de silicium zirconium, voire ne contenir que ladite couche.

Il n'est pas exclu cependant d'utiliser plusieurs couches de nitrure de silicium zirconium au sein du même revêtement aux fins d'obtenir le produit amélioré selon l'invention, ni d'utiliser un empilement de couches incluant la couche précitée et une ou plusieurs autres couches (ou en d'autres termes une ou plusieurs autres couches sur ou sous la couche de nitrure de silicium zirconium précitée), le revêtement (ou l'empilement) formé par ces couches augmentant la durabilité des plaques de par la présence de la couche de nitrure de silicium zirconium selon l'invention.

Le revêtement incluant au moins une couche de nitrure de silicium zirconium selon l'invention peut par exemple comprendre, entre le substrat et une couche telle que précitée, au moins une couche, ou un empilement de couches, influant par exemple sur l'aspect en réflexion de la plaque ou pouvant servir à bloquer une éventuelle migration d'ions ou pouvant servir de couche d'adhésion, etc telle qu'une couche d'oxynitrure de silicium ou de nitrure de silicium ou encore une couche d'adhésion en silice ou SiOx, l'épaisseur (physique) de cette ou de ces couches étant de préférence comprise dans un domaine allant de 1 à 30 nm. Dans le cas où le revêtement comporte plusieurs couches de nitrure de silicium zirconium (c'est-à-dire comportant du nitrure de silicium zirconium SixZryNz), le ratio atomique de Zr sur la somme Si + Zr, y/(x + y) pour chacune de ces couches est de préférence de 10 à 90%, mais il n'est pas nécessairement le même pour toutes ces couches comportant du nitrure de silicium zirconium (il est ainsi possible que le rapport y / (x + y) soit différent pour deux couches présentes comportant du nitrure de silicium zirconium SixZryNz).

Dans un mode de réalisation avantageux, la couche de nitrure de silicium zirconium ou au moins une couche de nitrure de silicium zirconium selon l'invention est déposée directement au contact du substrat en vitrocéramique (ou en d'autres termes, dans le produit, est (directement) en contact avec ladite vitrocéramique), en au moins l'une de ses faces (de préférence sur sa face destinée à être tournée vers l'utilisateur en position d'utilisation, ou face supérieure ou externe, l'autre face (inférieure ou interne) étant généralement cachée en position d'utilisation), sans autre couche de revêtement sous-jacente. Dans un autre mode de réalisation alternatif ou cumulatif, la couche de nitrure de silicium zirconium ou au moins une couche incorporant du nitrure de silicium zirconium selon l'invention constitue la couche extérieure (ou externe, c'est-à-dire la couche du revêtement se trouvant côté atmosphère ou encore la plus éloignée de la vitrocéramique ou la couche apparente) du revêtement l'incluant présent sur la vitrocéramique.

La couche précitée peut alternativement être revêtue d'une ou plusieurs autres couches (côté atmosphère). Dans un mode de réalisation particulièrement avantageux, le revêtement déposé sur le substrat vitrocéramique selon l'invention comprend ainsi, outre une couche de nitrure de silicium zirconium selon l'invention, une, ou au moins une, couche (notamment extérieure) à bas coefficient de frottement (inférieur à 0.25), telle qu'une couche de ou à base de : oxyde de titane TiOx ou TiZrOx ou BN ou ZrOx (l'une ou l'autre de ces couches pouvant également être dopée), etc, cette couche présentant des propriétés lubrifiantes et la présence de cette couche permettant de réduire encore la sensibilité à la rayure et à la coloration de l'empilement, l'épaisseur de cette couche étant de préférence inférieure à 20 nm, notamment inférieure ou égale à 10 nm, de préférence comprise entre 2 et 10 nm, notamment de l'ordre de 4 -8 nm. En particulier le revêtement sur le substrat vitrocéramique selon l'invention peut consister seulement en une combinaison des deux couches suivantes : une couche de nitrure de silicium zirconium telle que définie selon l'invention, au contact de la vitrocéramique, et une couche à coefficient de frottement inférieur à 0.25, côté atmosphère, la couche à bas coefficient de frottement revêtant la couche de nitrure de silicium zirconium selon l'invention. Le coefficient de frottement est mesuré en utilisant un appareil microscratch CSM commercialisé par CSM Instrument, une force constante de 1N étant appliquée sur une bille d'acier inox d'1cm de diamètre se déplaçant sur une distance de 2 cm à vitesse constante, trente passages (15 aller-retours) étant réalisés en tout, le coefficient de frottement étant le rapport entre la force tangentielle et la force normale mesurée par des capteurs.

Différents modes de réalisation décrits ci-avant peuvent bien entendu être combinés entre eux. De façon préférée, le revêtement déposé aux fins d'obtention des propriétés améliorées selon l'invention est constitué de la seule couche de nitrure de silicium zirconium définie selon l'invention, ou bien, successivement en partant du substrat, de ladite couche et d'une couche à bas coefficient de frottement (inférieur à 0.25) (par exemple TiO₂) comme décrit précédemment.

L'épaisseur totale du revêtement (incluant la couche et d'autres couches éventuelles) est préférentiellement comprise entre 200 et 5000 nm.

La couche ou le revêtement (ou l'empilement) incorporant la couche peut couvrir une partie seulement du substrat, ou toute une face (en particulier une face principale), par exemple la face supérieure en position d'utilisation, particulièrement sujette à nettoyage. En particulier, le substrat en vitrocéramique est muni sur sa face supérieure ou externe de ladite couche de nitrure de silicium zirconium selon l'invention, seule ou faisant partie d'un empilement de couches. L'article (ou produit) vitrocéramique selon l'invention est en particulier une plaque, ou un dispositif ou appareil, de cuisson ou tout article mobilier intégrant (ou comprenant, ou formé de) au moins un substrat en (matériau) vitrocéramique (le substrat étant le plus couramment sous forme d'une plaque, venant s'intégrer ou se monter dans le meuble et/ou combinée à d'autres éléments pour former le meuble), ledit substrat pouvant le cas échéant présenter des zones à caractère d'affichage (en combinaison par exemple avec des sources émettant de la lumière) ou des zones décorées ou être combiné avec des éléments chauffants. Dans son application la plus courante, l'article selon l'invention est destiné à servir de plaque de cuisson, cette plaque étant généralement destinée à être intégrée dans une table de cuisson ou cuisinière comprenant également des éléments chauffants, par exemple des foyers radiants ou halogènes ou des éléments de chauffage par induction. Dans une autre application avantageuse, l'article selon l'invention est un plan de travail en vitrocéramique ou un ilot central, le cas échéant avec différents affichages et sans nécessairement de zones de cuisson, voire un meuble de type console (le substrat formant par exemple la partie supérieure), etc..

Le substrat (ou l'article selon l'invention lui-même s'il n'est formé que du substrat) est généralement (sous forme de) une plaque, destinée notamment à être utilisée avec, en particulier à couvrir ou recevoir, au moins une source lumineuse et/ou un élément de chauffage ou destinée à servir de surface de meuble. Ce substrat (ou respectivement cette plaque) est généralement de forme géométrique, en particulier rectangulaire, voire carrée, voire circulaire ou ovale, etc, et présente généralement une face tournée vers l'utilisateur en position d'utilisation (ou face visible ou externe, généralement la face supérieure en position d'utilisation), une autre face généralement cachée, par exemple dans un châssis ou caisson de meuble, en position d'utilisation (ou face interne, généralement la face inférieure en position d'utilisation), et une tranche (ou chant ou épaisseur). La face supérieure ou externe est généralement plane et lisse mais peut aussi présenter localement au moins une zone en relief et/ou au moins une zone en creux et/ou au moins une ouverture et/ou des bords biseautés, ces variations de forme constituant notamment des variations continues de la plaque. La face inférieure ou interne peut également être plane et lisse ou munie de picots.

L'épaisseur du substrat vitrocéramique est généralement d'au moins 2 mm, notamment d'au moins 2.5 mm, et est avantageusement inférieure à 15 mm, en particulier est de l'ordre de 3 à 15 mm, notamment de l'ordre de 3 à 8 mm ou de l'ordre de 3 à 6 mm. Le substrat est de préférence une plaque plane ou quasi-plane (en particulier avec une flèche inférieure à 0,1% de la diagonale de la plaque, et de préférence de l'ordre de zéro).

Le substrat peut être à base de toute vitrocéramique, ce substrat présentant avantageusement un CTE nul ou quasi-nul, en particulier inférieur (en valeur absolue) à 30.10⁻⁷ K⁻¹ entre 20 et 700°C, notamment inférieur à 15.10⁻⁷K⁻¹, voire inférieur à 5.10⁻⁷ K⁻¹ entre 20 et 700°C.

L'invention est particulièrement avantageuse pour les substrats d'aspect sombre où les rayures se voient plus facilement, ces substrats étant faiblement transmissifs et peu diffusants, et étant notamment à base de toute vitrocéramique ayant, de manière intrinsèque, une transmission lumineuse TL inférieure à 40%, en particulier inférieure à 5%, notamment de 0.2 à 2% pour des vitrocéramiques jusqu'à 6 mm d'épaisseur, et une transmission optique (déterminée de façon connue en faisant le rapport entre l'intensité transmise et l'intensité incidente à une longueur d'onde donnée) entre 0.5 et 3% pour une longueur d'onde de 625 nm comprise dans le domaine du visible. Par «de manière intrinsèque», on entend que le substrat possède une telle transmission en lui-même, sans la présence d'un quelconque revêtement. Les mesures optiques sont faites selon la norme EN 410. En particulier, la transmission lumineuse TL est mesurée selon la norme EN 410 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante (en particulier avec le spectrophotomètre commercialisé par la société Perkin Elmer sous la référence Lambda 950).

En particulier, le substrat est un substrat d'aspect noir ou brun, permettant, en combinaison avec des sources lumineuses placées dessous, d'afficher des zones lumineuses ou des décors, tout en masquant les éventuels éléments sous-jacents. Il peut être notamment à base d'une vitrocéramique noire comprenant des cristaux de structure β-quartz au sein d'une phase vitreuse résiduelle, la valeur absolue de son coefficient de dilatation étant avantageusement inférieure ou égale à 15.10⁻⁷K⁻¹, voire à 5.10⁻⁷K⁻¹, telle que la vitrocéramique des plaques commercialisées sous le nom Kerablack+ par la société Eurokera. Il peut s'agir notamment d'une vitrocéramique de composition telle que décrite dans la demande de brevet EP0437228 ou US5070045 ou FR2657079, ou d'une vitrocéramique affinée à l'étain présentant un taux d'oxydes d'arsenic préférentiellement inférieur à 0.1 %, comme décrite par exemple dans la demande de brevet WO 2012/156444, ou encore d'une vitrocéramique affinée au(x) sulfure(s) comme décrit dans la demande de brevet WO2008053110, etc.

La présente invention peut également s'appliquer dans le cas où le substrat est plus clair, par exemple pour un substrat transparent, revêtu le cas échéant d'un revêtement opacifiant, généralement en peinture, sur sa face inférieure, tel qu'une plaque commercialisée sous le nom Keralite^{®} par la société Eurokera. Conformément à l'invention, le substrat vitrocéramique considéré est revêtu en une ou plusieurs zones (ou au moins une zone dudit substrat est revêtue), plus particulièrement en surface, sur au moins une partie d'une face, avantageusement sur au moins une partie de la face tournée vers l'utilisateur en position d'utilisation et/ou nécessitant une réduction de la visibilité des rayures et colorations, généralement la face supérieure ou externe en position d'utilisation, et en particulier est revêtu sur la totalité de ladite face. Il est revêtu d'au moins (ou par au moins) une couche définie selon l'invention ou un revêtement comportant ladite couche.

Le substrat selon l'invention peut le cas échéant être revêtu d'autres revêtements ou couches à effet fonctionnel (couche anti-débordement, couche opacifiante, etc.) et/ou décoratif, en particulier localisés, tels que des motifs habituels à base d'émaux (par exemple en face supérieure pour former des motifs simples ou des logos) ou une couche de peinture opacifiante sur la face inférieure du substrat, etc. En particulier, le substrat peut être revêtu d'au moins une couche d'émail et/ou de peinture, en particulier de type lustre, localisée ou non, au moins en partie ou en totalité sur (en particulier côté atmosphère) ou sous (en particulier au contact du substrat) la couche définie selon l'invention ou (au moins en partie ou en totalité) sur ou sous l'empilement incluant ladite couche selon l'invention, ladite couche d'émail ou de peinture/lustre pouvant être au contact de la couche selon l'invention. Par peinture de type lustre on entend en particulier une peinture constituée d'oxydes métalliques et dénuée de pigments, cette peinture ou lustre présentant notamment un indice de réfraction supérieur à 1.54. L'épaisseur d'une telle couche de peinture peut notamment être comprise entre 10 et 100 nm. L'article selon l'invention peut en outre comprendre, associés ou combinés au substrat, une ou plusieurs sources lumineuses et/ou un ou plusieurs éléments de chauffage (ou éléments chauffants, tels qu'un ou plusieurs éléments radiants ou halogènes et/ou un ou plusieurs brûleurs à gaz atmosphérique et/ou un ou plusieurs moyens de chauffage par induction), généralement placés en face inférieure du substrat. La ou les sources peuvent être intégrées dans ou couplées à une ou des structure(s) de type afficheur(s), à un bandeau de commande électronique à touches sensitives et affichage digital, etc, et sont avantageusement formées par des diodes électroluminescentes, plus ou moins espacées, éventuellement associées à un ou plusieurs guides optiques. L'article peut également être muni de (ou associé avec des) élément(s) fonctionnel(s) supplémentaire(s) (cadre, connecteur(s), câble(s), élément(s) de commande), etc.

L'invention a ainsi permis la mise au point d'un produit vitrocéramique à surface plus résistante aux rayures et colorations aux endroits souhaités (par exemple sur l'ensemble d'une face ou sur seulement quelques zones, par exemple des zones plus exposées aux manipulations ou rayures, telles que des zones de chauffage), en même temps que le produit conserve une résistance mécanique telle que requise pour diverses utilisations (notamment pour son utilisation comme plaque de cuisson). La solution selon la présente invention permet donc d'obtenir de façon simple et économique, sans opération complexe (la couche pouvant être déposée par des techniques de dépôt sous pression réduite tels que la pulvérisation cathodique, comme indiqué ultérieurement), de façon durable et avec une grande flexibilité, des zones de plus grande résistance aux rayures et colorations dans toute zone souhaitée du produit, et ceci même lorsque ces zones sont destinées à être soumises à des températures élevées. L'article selon l'invention présente notamment une bonne tenue thermique compatible avec l'utilisation de divers types de chauffages, et ne pose pas de problèmes d'entretien. Le produit selon l'invention ne subit en particulier pas de dégradation thermique à des températures supérieures à 400°C pouvant être atteintes notamment dans des applications telles que l'utilisation en tant que plaques de cuisson.

La présente invention concerne également un procédé de fabrication de l'article vitrocéramique selon l'invention, à partir d'un substrat en vitrocéramique dans lequel on dépose (ou applique), sur au moins une zone dudit substrat au moins une couche telle que sélectionnée selon l'invention.

L'application ou dépôt de la couche (ou le cas échéant de chaque couche) de nitrure de silicium zirconium selon l'invention peut s'effectuer par toute technique appropriée et rapide permettant notamment de faire des aplats ou couches uniformes de ce type de couches, notamment par procédé de dépôt sous pression réduite tel que pulvérisation cathodique, notamment assistée par magnétron, ou encore dépôt chimique en phase vapeur (CVD), le cas échéant assisté par champ plasma (PECVD), l'application se faisant de préférence par pulvérisation cathodique, notamment assistée par magnétron, ce dépôt se faisant avec un bon rendement et une bonne vitesse de dépôt. Les autres couches éventuelles d'oxydes ou nitrures du même revêtement peuvent également être déposées le cas échéant par le même mode de dépôt (les dépôts étant notamment successifs), les autres couches éventuellement présentes (émail, lustre) sur le substrat étant déposées indépendamment par toute technique habituelle (telle que la sérigraphie ou le jet d'encre pour les émaux).

La pulvérisation cathodique utilisée préférentiellement est en particulier du type AC (courant alternatif), DC (courant continu) ou de façon particulièrement préférée de type DC pulsé, selon le type de générateur employé pour polariser la cathode. Les cibles sont par exemple planaires.

Le dépôt de la couche (ou de chaque couche) de nitrure de silicium zirconium se fait notamment à l'aide d'une cible de silicium zirconium, comportant un ratio atomique de Zr sur la somme Si + Zr, y / (x + y), qui est de 10 % à 90 %, dans une atmosphère constituée de gaz plasmagène (généralement l'argon) et d'azote. En particulier, on utilise une cible de silicium zirconium, dopée le cas échéant avec de l'aluminium ou du bore pour augmenter sa conductivité électronique, dans une atmosphère constituée d'argon et d'azote.

Les espèces actives du plasma, en bombardant la cible, arrachent lesdits éléments, qui se déposent sur le substrat en formant la couche désirée et/ou réagissent avec le gaz contenu dans le plasma pour former ladite couche.

Avantageusement, l'atmosphère (constituée de gaz plasmagène) lors du dépôt, dans la chambre où le dépôt en question se fait, comprend moins de 1% en volume d'oxygène (pouvant être résiduel dans la chambre ou éventuellement apporté), voire est dénuée d'oxygène. De préférence, le débit d'oxygène lors du dépôt de la couche est nul, ou en d'autres termes il n'y a pas d'oxygène introduit volontairement dans l'atmosphère de pulvérisation de ladite cible).

La pression de dépôt (ou lors du dépôt) de la couche selon l'invention est en particulier d'au plus 2.5 µbar, de préférence est comprise dans un domaine allant de 1.5 µbar à 2.3 µbar. Par "pression de dépôt" on entend la pression régnant dans la chambre où est réalisé le dépôt de cette couche. L'application de la pression sélectionnée dans la ou les chambres de dépôt concernées contribue à obtenir une couche présentant une bonne résistance mécanique et à l'abrasion. La puissance de dépôt de la ou des couches est également comprise de préférence dans un domaine allant de 2 à 10 W/cm² de cible, lors du dépôt desdites couches, et la vitesse de défilement du substrat sous les différentes cibles est préférentiellement comprise dans un domaine allant de 0.1 à 3 m/min. Le dépôt se fait en particulier sur le substrat déjà céramisé et non-chauffé. Selon un mode de réalisation particulièrement préféré, le substrat revêtu est ensuite soumis à un traitement thermique, en particulier à un traitement de trempe ou un recuit, à une température par exemple de l'ordre de 750°C à 900°C, pendant environ une dizaine de minutes, ce traitement permettant de relaxer les contraintes et augmenter encore la dureté de la couche selon l'invention.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller en particulier jusqu'à 700°C. La céramisation comprend généralement une étape d'élévation progressive de la température jusqu'au domaine de nucléation, une étape de traversée en plusieurs minutes (par exemple entre 5 et 60 minutes) de l'intervalle de nucléation (par exemple entre 650 et 830°C), une nouvelle élévation de la température pour permettre la croissance des cristaux (céramisation dans un intervalle allant par exemple de 850 à 1000°C, avec maintien de la température du palier de céramisation pendant plusieurs minutes (par exemple de 5 à 30 minutes) puis un refroidissement rapide jusqu'à la température ambiante.

Le cas échéant, le procédé comprend également une opération de découpe (généralement avant céramisation), par exemple par jet d'eau, traçage mécanique à la molette, etc. suivie par une opération de façonnage (meulage, biseautage,...).

Les exemples suivants illustrent sans la limiter la présente invention.

Dans ces exemples, on a utilisé des plaquettes de 20 cm par 20 cm du même substrat formé d'une vitrocéramique noire translucide, commercialisée sous la référence KeraBlack+ par la société Eurokera, ces plaquettes présentant une face supérieure lisse et une face inférieure munie de picots et une épaisseur de 4 mm.

Sur ces plaquettes, a été déposée une couche épaisse, de 1200 nm d'épaisseur, de SiₓZr_{y}N_{z} avec un ratio atomique de Zr sur la somme Si + Zr, y / (x + y), de 32%, par pulvérisation cathodique assistée par magnétron en DC pulsé à basse pression de l'ordre de 2 µbar, avec une densité de puissance par unité surface de la cible inférieure à 6 W/cm² et un taux d'azote compris entre 55 et 65%.

La dureté H et le module élastique E de la vitrocéramique nue, puis de la vitrocéramique munie de la couche précédente déposée, ont ensuite été mesurés à l'aide d'un nanoindenteur de type DCMII-400, la pointe utilisée étant une pointe diamant pyramidale de type Berkovich (3 faces) selon la norme NF EN ISO 14577.

Il a été observé que la vitrocéramique nue a une dureté de 7,5 GPa et que le dépôt d'une couche épaisse de nitrure de silicium zirconium a permis d'augmenter la dureté jusqu'à environ 14.5 GPa . Le module d' élasticité (ou module élastique) E de la couche était de 140 GPa.

Un recuit (ou trempe) à 850 °C pendant 10 min a ensuite été effectué sur la vitrocéramique revêtue, résultant en des valeurs de dureté sur le substrat revêtu et de module d'élasticité E de la couche encore supérieures :H=15,5 -20.5 GPa et E=155 GPa.

La résistance à l'abrasion de ces échantillons a également été mesurée en utilisant un papier abrasif de type P800 commercialisé par Norton et incorporant des grains de carbure de silicium de 20 µm de diamètre équivalent moyen, en faisant un aller-retour de papier sur la surface de la vitrocéramique (nue ou revêtue) sur une distance de 3,81 cm à une vitesse de 15 aller-retour par minute et une pression appliquée de 5 N/cm². Les mesures en termes de nombre de rayures ont été faites à partir de photos prises en éclairant les échantillons à l'aide de diodes électroluminescentes 3 couleurs dans une boite à lumière, un traitement d'image (binarisé en noir et blanc et permettant de faire apparaitre les rayures en pixels noirs et la partie non rayée en pixels blanc) permettant d'analyser les photographies prises. Un "indice de rayabilité" a été évalué donnant un indice x correspondant au nombre y de pixels noirs relevé sur une image composée de 132000 pixels divisé par 10000 (x=y/10000, l'indice x étant par exemple de 1 lorsqu'il y a 10000 pixels noirs, de 2 lorsqu'il y a 20000 pixels noirs, etc), la vitrocéramique nue obtenant un indice de 4 alors que la vitrocéramique revêtue conformément à l'invention a obtenu un indice de 2 avant traitement thermique de recuit et de 1 après traitement thermique de recuit à une température de l'ordre de 850°C pendant environ une dizaine de minutes, montrant ainsi une réduction considérable du nombre de rayures par rapport à une vitrocéramique nue.

Le coefficient de frottement a également été mesuré à l'aide d'un appareil microscratch CSM commercialisé par CSM Instrument. Une force constante de 1N a été appliquée sur une bille d'acier inox d'1cm de diamètre se déplaçant sur une distance de 2 cm à vitesse constante, trente passages étant réalisés en tout. Le coefficient de frottement mesuré était le rapport entre la force tangentielle et la force normale appliquées mesurées par des capteurs. Le coefficient de frottement mesuré pour la vitrocéramique nue (contact vitrocéramique /métal) était de 0,3, et celui pour la vitrocéramique revêtue était abaissé à 0.2. A titre de comparaison, celui obtenu en utilisant comme revêtement, à la place de la couche selon l'invention, un revêtement dur de même épaisseur à base de SiN (sans zirconium) obtenait un coefficient plus élevé, égal à 0,4.

Ces mêmes échantillons ont été soumis à un test de frottement métallique sur un appareil de référence 5750 Linear Abraser (commercialisé par la société Taber) avec un frotteur plat en acier inox, le bras portant le frotteur faisant une course de 3,81 cm à une vitesse de 60 cycles par minute, avec une force d'application de 2 MPa. Le test consistait à effectuer des allers-retours et à déterminer le nombre de cycles à partir duquel un dépôt métallique était observé à la surface, ce test permettant de simuler le mouvement d'une casserole à la surface d'une vitrocéramique, les déplacements de casseroles générant deux types de dégradations : des rayures sous la forme de dépôts métalliques issus de la casserole, et des déformations plastiques ou fissurations ou abrasions de la vitrocéramique.

Sur la vitrocéramique nue, le frotteur rayait la surface en moins d'une vingtaine de cycles, tout comme pour des échantillons avec uniquement un dépôt (de même épaisseur que la couche selon l'invention testée) de TiOx ou de deTiZrOx, l'échantillon portant une couche de SiN engendrant des dépôts métalliques au bout d'une trentaine de cycles.

L'échantillon selon l'invention (munie de la couche de SiZrN précitée) ne se rayait qu'à partir d'une soixantaine de cycles soit 2 fois plus de cycles que le meilleur des échantillons comparatifs précédents.

L'ajout sur la couche de SiZrN précitée d'une couche de TiOx ou TiZrOx de 5 nm d'épaisseur, à coefficient de frottement de respectivement 0.17 et 0.15, a encore permis d'améliorer ces résultats en permettant notamment d'aller encore bien au-delà d'une centaine de cycles.

Divers tests de nettoyages de surface portant des traces de café, lait, vinaigres, sauce tomate brulée, à froid et à chaud, avec différents produits ménagers (tels que les produits de marque VitroClen de la société Reckitt Benckiser ou un produit Nettoyant induction et vitrocéramique de la société Kiraviv) ont également démontrés que la vitrocéramique revêtue de la couche sélectionnée selon l'invention était facile à nettoyer et que la couche ne se dégradait pas chimiquement. De même cette couche ne s'est pas délaminée après des chocs thermiques à 620°C, ni n'a montré de dégradation après 100 h à 580°C.

Les articles selon l'invention peuvent notamment être utilisées avec avantage pour réaliser une nouvelle gamme de plaques de cuisson pour cuisinières ou tables de cuisson ou une nouvelle gamme de tables de travail, consoles, crédences, ilots centraux, etc.

## Revendications

1. Article vitrocéramique, comprenant au moins un substrat, tel qu'une plaque, en vitrocéramique, ledit substrat étant revêtu en au moins une zone d'au moins une couche comportant du nitrure de silicium zirconium, SiₓZr_{y}N_{z}, avec un ratio atomique de Zr sur la somme Si + Zr, y / (x + y), de 10% à 90%, de préférence de 15% à 50%, et en particulier de 28% à 33%, l'épaisseur de ladite couche est comprise dans un domaine allant de 200 à 5000 nm.

2. Article vitrocéramique selon la revendication 1, **caractérisé en ce que** ladite couche est une couche de nitrure de silicium zirconium, constituée à au moins 85% en poids, voire uniquement, à l'exception des impuretés éventuellement présentes qui ne représentent dans ce cas pas plus de 5% de la couche, de silicium, zirconium et azote.

3. Article vitrocéramique selon l'une des revendications 1 à 2, **caractérisé en ce que** l'épaisseur de ladite couche est comprise dans un domaine allant de 700 à 2500 nm, et de préférence de 1000 à 1500 nm.

4. Article vitrocéramique selon l'une des revendications 1 à 3, **caractérisé en ce que** ladite couche présente une dureté H supérieure à 15 GPa, et en particulier supérieure à 20 GPa, voire supérieure à 30 GPa, et un module d'élasticité E supérieur à 140 GPa en particulier supérieur à 150 GPa.

5. Article vitrocéramique selon l'une des revendications 1 à 4, **caractérisé en ce que** le revêtement incluant ladite couche ne contient qu'une seule couche comportant du nitrure de silicium zirconium, voire ne contient que ladite couche.

6. Article vitrocéramique selon l'une des revendications 1 à 5, **caractérisé en ce que** le substrat est revêtu d'au moins une couche d'émail et/ou de peinture, en particulier de type lustre, sur ou sous ladite couche comportant du nitrure de silicium zirconium.

7. Article vitrocéramique selon l'une des revendications 1 à 6, **caractérisé en ce que** ladite couche est directement en contact avec ledit substrat en vitrocéramique, sans autre couche de revêtement sous-jacente.

8. Article vitrocéramique selon l'une des revendications 1 à 7, **caractérisé en ce que** ladite couche, ou au moins une couche incorporant du nitrure de silicium zirconium, constitue la couche extérieure du revêtement l'incluant présent sur la vitrocéramique.

9. Article vitrocéramique selon l'une des revendications 1 à 8, **caractérisé en ce que** ladite couche est revêtue d'au moins une couche à coefficient de frottement inférieur à 0.25.

10. Article vitrocéramique selon l'une des revendications 1 à 9, **caractérisé en ce que** ladite couche présente une nitruration z allant notamment de 4/3 (x + y) à 5/3 (x + y).

11. Article vitrocéramique selon l'une des revendications 1 à 10, **caractérisé en ce que** le taux de dopant(s), en particulier l'aluminium, dans la cible utilisée, de même que dans la couche, ou le taux d'autre(s) composant(s) dans la couche, étant inférieur à 15% en poids, de préférence inférieur à 10% en poids, voire nul.

12. Article vitrocéramique selon l'une des revendications 1 à 11, **caractérisé en ce qu'**il s'agit d'un dispositif de cuisson comportant en outre un ou plusieurs éléments de chauffage.

13. Procédé de fabrication d'un article en vitrocéramique selon l'une des revendications 1 à 12, cet article comprenant au moins un substrat, tel qu'une plaque, en vitrocéramique, dans lequel on dépose, sur au moins une zone dudit substrat au moins une couche comportant du nitrure de silicium zirconium, SixZryNz, avec un ratio atomique de Zr sur la somme Si + Zr, y / (x + y), de 10% à 90%, de préférence de 15% à 50%, et en particulier de 28% à 33%.

14. Procédé selon la revendication 13, **caractérisé en ce que** ledit substrat, ainsi revêtu, est soumis à un traitement de trempe ou à un recuit à une température de 750 à 900°C.

15. Procédé selon l'une des revendications 13 ou 14, **caractérisé en ce que** le dépôt de ladite couche se fait par pulvérisation cathodique, notamment assistée par magnétron, ladite pulvérisation cathodique étant de préférence de type DC pulsé.

## Patentansprüche

1. Glaskeramikgegenstand, umfassend mindestens ein Substrat, wie zum Beispiel ein Kochfeld, aus Glaskeramik, wobei das Substrat in mindestens einem Bereich mit mindestens einer Schicht beschichtet ist, die Siliciumzirconiumnitrid, SiₓZr_{y}N_{z}, mit einem Atomverhältnis von Zr zu der Summe Si+ Zr, y / (x + y), von 10 % bis 90 %, vorzugsweise von 15 % bis 50 % und im Besonderen von 28 % bis 33 % aufweist, wobei die Dicke der Schicht in einer Domäne von 200 bis 5000 nm liegt.

2. Glaskeramikgegenstand nach Anspruch 1,
**dadurch gekennzeichnet, dass** die Schicht eine Schicht aus Siliciumzirconiumnitrid ist, die zu mindestens 85 Gew.-% oder gar nur mit Ausnahme von Verunreinigungen, die gegebenenfalls vorhanden sind, die in diesem Fall nicht mehr als 5 % der Schicht darstellen, aus Silicium, Zirconium und Stickstoff besteht.

3. Glaskeramikgegenstand nach einem der Ansprüche 1 bis 2,
**dadurch gekennzeichnet, dass** die Dicke der Schicht in einer Domäne von 700 bis 2500 nm und vorzugsweise von 1000 bis 1500 nm liegt.

4. Glaskeramikgegenstand nach einem der Ansprüche 1 bis 3,
**dadurch gekennzeichnet, dass** die Schicht eine Härte H von mehr als 15 GPa, und im Besonderen mehr als 20 GPa, sogar mehr als 30 GPa, und einen Elastizitätsmodul E von mehr als 140 GPa, im Besonderen von mehr als 150 GPa aufweist.

5. Glaskeramikgegenstand nach einem der Ansprüche 1 bis 4,
**dadurch gekennzeichnet, dass** die Beschichtung einschließlich der Schicht nur eine einzige Schicht enthält, die Siliciumzirconiumnitrid aufweist, sogar nur die Schicht enthält.

6. Glaskeramikgegenstand nach einem der Ansprüche 1 bis 5,
**dadurch gekennzeichnet, dass** das Substrat mit mindestens einer Emaille- und/oder Lackschicht, im Besonderen der Art Lüster, auf oder unter der Schicht, die Siliciumzirconiumnitrid enthält, beschichtet ist.

7. Glaskeramikgegenstand nach einem der Ansprüche 1 bis 6,
**dadurch gekennzeichnet, dass** die Schicht direkt in Kontakt mit dem Glaskeramiksubstrat ohne weitere darunterliegende Beschichtungsschicht steht.

8. Glaskeramikgegenstand nach einem der Ansprüche 1 bis 7,
**dadurch gekennzeichnet, dass** die Schicht oder mindestens eine Schicht, die Siliciumzirconiumnitrid beinhaltet, die äußere Schicht der Beschichtung bildet, die sie auf der Glaskeramik vorhanden einschließt.

9. Glaskeramikgegenstand nach einem der Ansprüche 1 bis 8,
**dadurch gekennzeichnet, dass** die Schicht mit mindestens einer Schicht mit Reibungskoeffizient von weniger als 0,25 beschichtet ist.

10. Glaskeramikgegenstand nach einem der Ansprüche 1 bis 9,
**dadurch gekennzeichnet, dass** die Schicht eine Nitrierung z von insbesondere 4/3 (x + y) bis 5/3 (x + y) vorweist.

11. Glaskeramikgegenstand nach einem der Ansprüche 1 bis 10,
**dadurch gekennzeichnet, dass** der Anteil des/der Dotierungsmittel(s), im Besonderen Aluminium, in dem verwendeten Ziel, ebenso wie in der Schicht, oder der Anteil (des) anderen/anderer Bestandteils/Bestandteile in der Schicht weniger als 15 Gew.-%, vorzugsweise weniger als 10 Gew.- %, sogar null beträgt.

12. Glaskeramikgegenstand nach einem der Ansprüche 1 bis 11,
**dadurch gekennzeichnet, dass** es sich um eine Kochvorrichtung handelt, die ferner ein oder mehrere Heizelemente aufweist.

13. Verfahren zum Herstellen eines Glaskeramikgegenstands nach einem der Ansprüche 1 bis 12, wobei dieser Gegenstand mindestens ein Substrat, wie zum Beispiel ein Kochfeld, aus Glaskeramik, umfasst, wobei auf mindestens einen Bereich des Substrats mindestens eine Schicht abgelagert wird, die Siliciumzirconiumnitrid, SixZryNz, mit einem Atomverhältnis von Zr zu der Summe Si + Zr, y / (x + y), von 10 % bis 90 %, vorzugsweise von 15 % bis 50 % und im Besonderen von 28 % bis 33 % aufweist.

14. Verfahren nach Anspruch 13, **dadurch gekennzeichnet, dass** das Substrat, so beschichtet, einer Abschreckungsbehandlung unterzogen wird oder bei einer Temperatur von 750 bis 900 °C nachgebrannt wird.

15. Verfahren nach einem der Ansprüche 13 oder 14,
**dadurch gekennzeichnet, dass** das Ablagern der Schicht durch Kathodenzerstäubung, speziell magnetronunterstützt, erfolgt, wobei die Kathodenzerstäubung vorzugsweise der Art gepulster Gleichstrom ist.

## Claims

1. A glass-ceramic article, comprising at least one substrate, such as a plate, made of glass-ceramic, said substrate being coated in at least one zone with at least one layer comprising zirconium silicon nitride, SiₓZr_{y}N_{z}, with an atomic ratio of Zr to the sum Si + Zr, y/(x + y), of 10% to 90%, preferably of 15% to 50% and in particular of 28% to 33%, the thickness of said layer being within a range extending from 200 to 5000 nm.

2. The glass-ceramic article as claimed in claim 1, **characterized in that** said layer is a zirconium silicon nitride layer, essentially formed (to at least 85% by weight), indeed even solely formed, with the exception of the impurities possibly present which in this case do not represent more than 5% of the layer, of silicon, zirconium and nitrogen.

3. The glass-ceramic article as claimed in either of claims 1 and 2, **characterized in that** the thickness of said layer is within a range extending from 700 to 2500 nm and preferably from 1000 to 1500 nm.

4. The glass-ceramic article as claimed in one of claims 1 to 3, **characterized in that** said layer exhibits a hardness H of greater than 15 GPa and in particular of greater than 20 GPa, indeed even of greater than 30 GPa, and a modulus of elasticity E of greater than 140 GPa, in particular of greater than 150 GPa.

5. The glass-ceramic article as claimed in one of claims 1 to 4, **characterized in that** the coating including said layer contains only a single layer comprising zirconium silicon nitride, indeed even contains only said layer.

6. The glass-ceramic article as claimed in one of claims 1 to 5, **characterized in that** the substrate is coated with at least one layer of enamel and/or of paint, in particular of luster type, on or under said layer comprising zirconium silicon nitride.

7. The glass-ceramic article as claimed in one of claims 1 to 6, **characterized in that** said layer is directly in contact with said substrate made of glass-ceramic, without other underlying coating layer.

8. The glass-ceramic article as claimed in one of claims 1 to 7, **characterized in that** said layer, or at least one layer incorporating zirconium silicon nitride, constitutes the exterior layer of the coating including it present on the glass-ceramic.

9. The glass-ceramic article as claimed in one of claims 1 to 8, **characterized in that** said layer is coated with at least one layer having a coefficient of friction of less than 0.25.

10. The glass-ceramic article as claimed in one of claims 1 to 9, **characterized in that** said layer exhibits a nitridation z ranging in particular from 4/3(x + y) to 5/3(x + y).

11. The glass-ceramic article as claimed in one of claims 1 to 10, **characterized in that** the content of dopant(s), in particular aluminum, in the target used, as well as in the layer, or the content of other component(s) in the layer, being less than 15% by weight, preferably less than 10% by weight, indeed even zero.

12. The glass-ceramic article as claimed in one of claims 1 to 11, **characterized in that** it is a cooking device additionally comprising one or more heating elements.

13. A process for the manufacture of an article made of glass-ceramic as claimed in one of claims 1 to 12, this article comprising at least one substrate, such as a plate, made of glass-ceramic, in which at least one layer comprising zirconium silicon nitride, SiₓZr_{y}N_{z}, with an atomic ratio of Zr to the sum Si + Zr, y/(x + y), of 10% to 90%, preferably of 15% to 50% and in particular of 28% to 33%, is deposited on at least one zone of said substrate.

14. The process as claimed in claim 13, **characterized in that** said substrate, thus coated, is subjected to a tempering treatment or to an annealing at a temperature of 750°C to 900°C.

15. The process as claimed in either of claims 13 and 14, **characterized in that** the deposition of said layer is carried out by cathode sputtering, in particular magnetron-enhanced, said cathode sputtering preferably being of pulsed DC type.
